# EUROPÄISCHE PATENTSCHRIFT

(11) **EP 3 596 954 B1**
(45) Veröffentlichungstag und Bekanntmachung des Hinweises auf die Patenterteilung: **09.12.2026**
(21) Anmeldenummer: 18708973.5
(22) Anmeldetag: 01.03.2018
(51) Int. Cl.: H04W 12/06, G05D 1/00, H04L 9/32

(54) **AUTHENTIFIZIERUNGSSYSTEM FÜR EIN ZUMINDEST TEILWEISE AUTONOMES FAHRZEUG**
AUTHENTICATION SYSTEM FOR AN AT LEAST PARTIALLY AUTONOMOUS VEHICLE
SYSTÈME D'AUTHENTIFICATION POUR UN VÉHICULE AU MOINS PARTIELLEMENT AUTONOME

(30) Priorität: 14.03.2017 DE 102017204169
(43) Veröffentlichungstag der Anmeldung: 22.01.2020
(73) Patentinhaber: Bayerische Motoren Werke Aktiengesellschaft, 80809 München (DE)
(72) Erfinder: SCHRÖDER, Astrid, 80799 Muenchen (DE)
(86) Internationale Anmeldenummer: PCT/EP2018/055082
(87) Internationale Veröffentlichungsnummer: WO 2018/166809

(56) Entgegenhaltungen:
- WO-A1-2015/169204
- WO-A1-2015/179765
- US-A1- 2015 339 928

## Beschreibung

Die Erfindung betrifft ein zumindest teilweise autonomes Fahrzeug und ein Transportsystem mit einem solchen zumindest teilweise autonomen Fahrzeug. Als teilweise autonomes Fahrzeug ist dabei ein wenigstens einspuriges Fahrzeug (z.B. Auto, Motorrad, ...) zu verstehen, das zumindest teilweise autonom Fahrfunktionen ausführt. Während die Fahrfunktionen autonom ausgeführt werden ist vorzugsweise keine Aktion bzw. kein aktiver Eingriff eines Nutzers in einen Fahrablauf notwendig.

Ausgangspunkt der Erfindung ist, dass Fahrzeuge sich selbst nicht gegenüber einem Interaktionspartner, bspw. einem Nutzer oder einem Verkehrsobjekt, ausweisen können. Somit kann sich insbesondere ein autonom agierendes Fahrzeug weder selbst autorisieren noch authentifizieren. In gängigen Systemen erfordert eine Autorisierung bzw. Authentifizierung stets einen Eingriff eines Nutzers.

Als Beispiel kann die applikationsbasierte Bestellung eines Fahrzeugs eines Fahrdienstes dienen. Hierbei ordert ein Nutzer meist unter Verwendung eines Telekommunikationsendgeräts (z.B. Smartphone) ein Fahrzeug für einen Transport zu einem Ziel. Der Transportauftrag wird von einem System, mit dem das Telekommunikationsendgerät kommunikativ verbunden ist, verarbeitet und der Fahrer des Fahrzeugs erhält einen Auftrag, den Nutzer an einer übermittelten Position abzuholen. Dem Nutzer wird nun eine Rückmeldung darüber gegeben, wo sich das Fahrzeug des Fahrdienstes befindet, das von dem Fahrer geführt wird, der den Auftrag angenommen hat. Auch erhält der Nutzer eine Nachricht über Identifikationsmerkmale des Fahrzeugs und des Fahrers (z.B. Nummernschild, Name des Fahrers). Erreicht nun das Fahrzeug die übermittelte Position, so erfolgt eine Überprüfung der Identität des Fahrzeugs und/oder des Fahrers durch den Nutzer auf Basis der an ihn übermittelten Identifikationsmerkmale.

Hierbei erfolgt jedoch keine Authentifizierung durch das Fahrzeug bei dem Nutzer, sondern in umgekehrter Weise durch den Nutzer an dem Fahrzeug. Für den Nutzer ist es nicht möglich zu erkennen, ob die Identifikationsmerkmale des Fahrers und/oder des Fahrzeugs unverfälscht wiedergegeben werden. Beispielsweise kann der Fahrer einen falschen Namen angeben. Eine sichere Authentifizierung ist nicht möglich.

WO 2015/179 765 A1 offenbart eine Computervorrichtung eines Fahrzeugs, die Informationen empfängt, die eine Client-Computervorrichtung, einen Abholort und einen Verschlüsselungsschlüssel identifizieren. Wenn sich das Fahrzeug innerhalb einer bestimmten Entfernung vom Abholort befindet, verwendet die Computervorrichtung den Verschlüsselungsschlüssel, um die Client-Computervorrichtung zu authentifizieren. Wenn die Client-Computervorrichtung authentifiziert ist, kann die Computervorrichtung eine erste Entfernung zwischen der Client-Computervorrichtung und dem Fahrzeug basierend auf einer Stärke eines von der Client-Computervorrichtung empfangenen Signals schätzen. Die Rechenvorrichtung kann dann automatisch bestimmen, wann das Fahrzeug zu entriegeln ist, indem sie zwischen einem ersten Distanzwert und einem zweiten Distanzwert wählt. Der erste Wert wird ausgewählt, wenn der erste Abstand größer als ein Schwellenwert ist, und der zweite Wert wird ausgewählt, wenn der erste Abstand kleiner als der Schwellenwert ist. Die Rechenvorrichtung kann das Fahrzeug basierend auf der Bestimmung entriegeln.

Ziel der Erfindung ist es nun, es zu ermöglichen, dass sich das Fahrzeug auch selbst authentifiziert bzw. für bestimmte geografische Bereiche eine Autorisierung durch das Fahrzeug erfolgen kann.

Die Erfindung stellt daher ein Fahrzeug und ein System gemäß der unabhängigen Ansprüche bereit. Weiterbildungen der Erfindung sind Gegenstand der abhängigen Ansprüche.

In einem ersten Aspekt wird zumindest ein teilautonomes Fahrzeug bereitgestellt, aufweisend wenigstens eine Kommunikationsschnittstelle zur fahrzeugexternen Kommunikation, einen Speicher, der dazu eingerichtet ist, wenigstens eine Authentifizierungsinformation zu speichern, und eine Steuereinheit, die dazu eingerichtet ist, die Kommunikationsschnittstelle anzusteuern und die Authentifizierungsinformation aus dem Speicher über die Kommunikationsschnittstelle auszugeben, wenn die Steuereinheit eine Anweisung zur Ausgabe der Authentifizierungsinformation empfängt. Dabei ist zu verstehen, dass die Anweisung ein Signal sein kann, das von einem Signalgeber innerhalb und/oder außerhalb des Fahrzeugs ausgegeben wird. So kann eine Einheit in dem Fahrzeug eine entsprechende Anweisung an die Steuereinheit ausgeben. Andererseits kann, bei Empfang der Anweisung über bspw. die Kommunikationsschnittstelle, dem Fahrzeug auch von extern die Anweisung zugeführt werden und insbesondere von einem Telekommunikationsgerät.

Die Steuereinheit kann die Authentifizierungsinformation aus wenigstens einem eindeutigen Identifikator des Fahrzeugs und/oder einer dem Fahrzeug zugeführten Information, vorzugsweise mittels eines kryptografischen Verfahrens erzeugen. Die Steuereinheit kann die Authentifizierungsinformation in dem Speicher abspeichern.

Die Steuereinheit kann die zugeführte Information an der wenigstens einen Kommunikationsschnittstelle erfassen. Die zugeführte Information kann insbesondere eine Auftragsinformation sein. Die Steuereinheit kann die Auftragsinformation hinsichtlich eines Ziels, d.h. eines geografischen Zielortes, hin auswerten. Die

Steuereinheit kann das Fahrzeug dazu veranlassen, das Ziel anzusteuern. Hierzu gibt die Steuereinheit direkt oder indirekt Signale an Aktoren des Fahrzeugs aus. Die indirekte Ausgabe erfolgt dabei über andere Fahrzeugsteuereinheiten, während eine direkte Ausgabe von der Steuereinheit direkt an die entsprechenden Aktoren erfolgt.

Die Steuereinheit kann die Authentifizierungsinformation über die wenigstens eine Kommunikationsschnittstelle in einer Ad-hoc-Kommunikation, drahtlos, drahtgebunden und/oder in einer Nahfeldkommunikation ausgeben.

Das Fahrzeug kann eine Positionserfassungseinheit aufweisen, die eine Position des Fahrzeugs bestimmen kann und die Position an die Steuereinheit ausgeben kann. Die Steuereinheit kann die wenigstens eine Authentifizierungsinformation abhängig von der Position ausgeben. Insbesondere kann dabei von der Positionserfassungseinheit eine Lage der bestimmten Position zu wenigstens einem gespeicherten geografischen Bereich und/oder einem geografischen Ort bestimmt werden. Der geografische Bereich kann dabei in einem Speicher des Fahrzeugs abgespeichert sein. Die Bestimmung der Position kann in bestimmten zeitlichen und/oder räumlichen Abständen erfolgen. Die Ausgabe erfolgt insbesondere dann, wenn die bestimmte Position in einem vorbestimmten Abstand zu dem und/oder innerhalb des wenigstens einen geografischen Bereichs liegt, mit dem geografischen Bereich überein stimmt und/oder wenn eine Grenze des wenigstens einen geografischen Bereichs überschritten wird. Dabei können ein Eintreten und ein Austreten aus dem geografischen Bereich durch die Positionserfassungseinheit bestimmt werden.

Das Fahrzeug kann eine Überwachungseinheit aufweisen, die dazu eingerichtet ist, einen Bereich des Fahrzeugs zu überwachen und eine Überwachungsfunktion an die Steuereinheit auszugeben. Die Steuereinheit kann dann abhängig von der Überwachungsinformation ein Signal ausgeben. Bei der Überwachungseinheit handelt es sich insbesondere um eine Präsens- und/oder Bewegungsmeldeeinheit. Das von der Steuereinheit ausgegebene Signal kann insbesondere an die wenigstens eine Kommunikationseinheit bzw. die wenigstens eine Kommunikationsschnittstelle ausgegeben werden. So kann eine auf dem Signal basierende Information über die Kommunikationsschnittstelle bspw. an ein Kommunikationssystem und/oder an ein drahtloses Kommunikationsgerät erfolgen.

Das Fahrzeug kann eine Identifikationseinheit aufweisen. Die Identifikationseinheit kann eine Personenidentifikationsinformation erfassen und an die Steuereinheit ausgeben. Die Personenidentifikationsinformation kann dabei auf Basis einer biometrischen Identifikation einer Person ausgegeben werden, die sich insbesondere in einem Bereich des Fahrzeugs befindet. Beispielsweise kann die Identifikationseinheit einen Fingerabdruck, eine Stimme, eine Netzhaut, sowie andere biometrische Eigenschaften einer Person erfassen und mit Informationen aus einem Speicher vergleichen, der Teil des Fahrzeugs ist oder funktional damit verbunden ist. Insbesondere können biometrische Merkmale für eine Person über die wenigstens eine Kommunikationsschnittstelle an das Fahrzeug übermittelt werden. Beispielsweise können die biometrischen Informationen von einem Kommunikationsnetzwerk bzw. einem Telekommunikationsgerät an das Fahrzeug übermittelt werden. Die Steuereinheit kann dann abhängig von den Identifikationsinformationen ein Signal ausgeben. Das Signal kann an die Kommunikationsschnittstelle ausgegeben werden bzw. mittels der Kommunikationsschnittstelle an ein Kommunikationsnetzwerk. Das Kommunikationsnetzwerk verbindet das Fahrzeug insbesondere mit einem Kommunikationsgerät eines Nutzers. Das Signal bzw. eine darauf basierende Information zeigt an, ob eine Identifikation einer Person erfolgreich war oder nicht.

Die Steuereinheit kann die wenigstens eine Kommunikationsschnittstelle überwachen und bei Empfang einer Anweisung die Authentifizierungsinformation ausgeben. Dabei wird die Authentifizierungsinformation vorzugsweise über die wenigstens eine Kommunikationsschnittstelle ausgegeben.

Die Steuereinheit kann die Authentifizierungsinformation abhängig von Konfigurationsdaten und/oder der Anweisung ausgeben. Die Konfigurationsdaten können dabei von der Steuereinheit mittels der Kommunikationsschnittstelle erfasst und/oder aus dem Speicher ausgelesen werden. Auch hier kann der Speicher ein in dem Fahrzeug vorhandener Speicher bzw. ein funktional mit dem Fahrzeug verbundener Speicher bspw. in einem entfernten Rechensystem sein, mit dem das Fahrzeug über ein vorzugsweise drahtloses Kommunikationsnetz verbunden ist.

In einem weiteren Aspekt wird ein Transportsystem bereitgestellt, aufweisend wenigstens einen Sender, der dazu eingerichtet ist, wenigstens eine Auftragsinformation an ein zumindest teilweise autonomes Fahrzeug, wie es hierin beschrieben ist, auszugeben und wobei das Fahrzeug eine Aktion abhängig von der Auftragsinformation ausführen kann und eine Authentifizierungsinformation an den Sender übermitteln kann, insbesondere dann, wenn das Fahrzeug eine vorbestimmte Anweisung von dem Sender empfängt. Der Sender kann hierbei Teil des Kommunikationsnetzwerkes sein. Der Sender kann auch ein Kommunikationsgerät sein.

Der Sender kann die Authentifizierungsinformation mit einer Verifikationsinformation verifizieren. Die Verifikationsinformation und die Authentifizierungsinformation können mit der Auftragsinformation assoziiert sein. Das Fahrzeug kann die wenigstens eine Authentifizierungsinformation an den Sender übermitteln, wenn eine bestimmte Position des Fahrzeugs in einem vorbestimmten Abstand zu einem und/oder innerhalb des wenigstens einen geografischen Bereichs liegt bzw. mit dem geografischen Bereich überein stimmt und/oder eine Grenze des wenigstens einen geografischen Bereichs überschreitet.

Das Fahrzeug kann eine Position, eine Überwachungsinformation und/oder eine Identifikationsinformation an den Sender ausgeben.

Der Sender kann auf Basis einer verifizierten Authentifizierungsinformation, der Position, der Überwachungsinformation und/oder der Identifikationsinformation die Auftragsinformation und/oder ein Teil davon bestätigen, als erledigt definieren, einen damit verbundenen Auftrag zu beenden und/oder eine Aktion auszuführen, insbesondere einen Aktor anzusteuern.

Der Sender kann ein Telekommunikationsgerät und/oder ein Verkehrsobjekt sein.

Die Erfindung wird nunmehr auch mit Blick auf die Figuren beschrieben:
- Fig. 1: zeigt schematisch ein Fahrzeug gemäß der Erfindung.
- Fig. 2: zeigt schematisch und exemplarisch ein Transportsystem gemäß der Erfindung.
- Figs. 3a bis j: zeigen ein Anwendungsbeispiel der Erfindung.
- Fig. 4: zeigt ein weiteres exemplarisches Anwendungsbeispiel der Erfindung.
- Fig. 5: zeigt wiederum ein Anwendungsbeispiel der Erfindung.

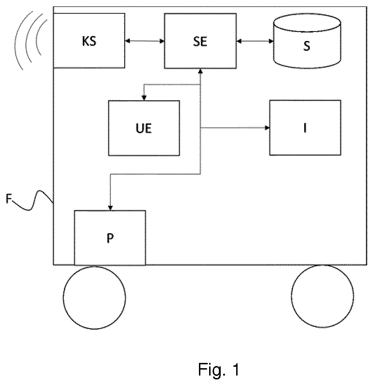

Fig. 1 zeigt exemplarisch in einem Blockdiagramm ein Fahrzeug F. Das Fahrzeug F weist eine Steuereinheit SE, einen Speicher S sowie eine Kommunikationsschnittstelle KS auf. Die Steuereinheit SE ist dabei kommunikativ mit der wenigstens einen Kommunikationsschnittstelle KS und dem Speicher S verbunden.

Der Speicher S kann dabei als flüchtiger oder nichtflüchtiger Speicher (RAM, ROM, Flash-Speicher, Festplatte, ...) ausgestaltet sein. Der Speicher S muss nicht notwendigerweise in dem Fahrzeug vorgesehen sein, sondern kann auch bspw. in einem entfernten Rechensystem bereitgestellt werden. Die Steuereinheit SE ist dann insbesondere unter der Verwendung der wenigstens einen Kommunikationsschnittstelle KS mit dem Speicher S verbunden, bspw. über ein drahtloses Kommunikationsnetzwerk. Die Kommunikationsschnittstelle KS kann insbesondere als drahtgebundene oder drahtlose Schnittstelle ausgestaltet sein. Die Kommunikationsschnittstelle KS erlaubt es insbesondere, der Steuereinheit SE und/oder dem Fahrzeug F über ein drahtloses Kommunikationsnetzwerk (GSM-Netz, LTE-Netz, 3G-Netz, 4G-Netz, 5G-Netz, ...) zu kommunizieren. Weiter weist das Fahrzeug F, wie exemplarisch dargestellt, eine Positionserfassungseinheit P auf. Ebenso können zusätzlich eine Überwachungseinheit UE und/oder eine Identifikationseinheit I vorgesehen sein. Die Authentifizierungsinformationen sind vorzugsweise in dem Speicher S abgelegt. Die Authentifizierungsinformation kann dabei zumindest Teil eines kryptografischen Schlüsselpaares sein. Die Authentifizierungsinformation kann insbesondere von der Steuereinheit SE auf Basis eines eindeutigen Fahrzeugidentifikators sowie über die wenigstens eine Kommunikationsschnittstelle KS empfangene Daten und/oder Daten aus dem Speicher S erzeugt werden. Dazu können kryptografische Verfahren verwendet werden, die bspw. für eine symmetrische und/oder asymmetrische Verschlüsselung und/oder Signierung von Informationen bekannt sind (bspw. DES, AES, SHA256, ...).

Die Überwachungseinheit kann Sensoren insbesondere im Fahrzeug F umfassen, aber auch Sensoren, die bspw. ein Umfeld des Fahrzeugs F erfassen. Beispiele für die Sensoren sind dabei optische Sensoren, akustische Sensoren, Drucksensoren, Bewegungssensoren und/oder Präsenzmelder, die bspw. in Sitzen, Griffen, Abdeckungen und/oder in Verkleidungsteilen des Fahrzeugs angebracht sein können. Insbesondere detektiert die Überwachungseinheit UE, ob sich eine Person in einem Innenraum des Fahrzeugs befindet, diesen betritt und/oder verlässt.

Die Identifikationseinheit I dient dazu, die Identität einer Person zu identifizieren. Dazu kann die Identifikationseinheit I akustische und/oder optische Sensoren aufweisen. Diese können mit denen, die von der Überwachungseinheit UE umfasst werden, identisch oder zumindest teilweise identisch sein. Die Sensoren der Identifikationseinheit I dienen dabei insbesondere der Erfassung biometrischer Merkmale. Die erfassten biometrischen Merkmale (bspw. Fingerabdruck, Gesicht, Iris, Stimme, Größe, Gewicht, ...) können von der Identifikationseinheit mit Daten verglichen werden, die bspw. aus dem Speicher S abgerufen werden. Auf Basis des Vergleichs durch die Identifikationseinheit I kann diese dann ein Signal ausgeben, das anzeigt, ob eine Identifikation einer Person erfolgreich war. Dies kann insbesondere dazu eingesetzt werden, um sicherzustellen, dass eine bestimmte Person in dem Fahrzeug befindet. Während also ein von der Überwachungseinheit UE ausgegebenes Signal vorwiegend anzeigt, ob sich eine Person in dem Fahrzeug befindet, kann die Identifikationseinheit durch das von ihr ausgegebene Signal anzeigen, ob sich die korrekte Person in dem Fahrzeug befindet bzw. sich die korrekte Person an der Identifikationseinheit identifiziert hat.

Die Positionserfassungseinheit P dient insbesondere dazu, eine Position des Fahrzeugs F zu erfassen. Die von der Positionserfassungseinheit P erfasste Position kann von der Positionserfassungseinheit P dann mit einem geografischen Bereich, der insbesondere ein geografischer Ort sein kann, verglichen werden. Der wenigstens eine geographische Bereich kann ebenfalls in dem Speicher S hinterlegt sein. Entsprechend kann die Positionserfassungseinheit P eine erfasste Position mit dem geografischen Bereich vergleichen. Insbesondere kann die Positionserfassungseinheit P eine Lage der erfassten Position zu dem wenigstens einen geografischen Bereich ermitteln. Wird bspw. ein Abstand zu einem geografischen Bereich unter- bzw. überschritten, so kann die Positionserfassungseinheit P ein Signal an die Steuereinheit ausgeben, die diesen Sachverhalt anzeigt. Insbesondere kann die Positionserfassungseinheit P auch ermitteln, ob das Fahrzeug F basierend auf der erfassten Information in einen geografischen Bereich eintritt, oder aus diesem ausfährt. Entsprechend kann jeweils ein Signal durch die Positionserfassungseinheit P an die Steuereinheit SE ausgegeben werden.

Die Positionserfassungseinheit kann, insbesondere dann, wenn der wenigstens eine geografische Bereich ein geografischer Ort ist, auch ermitteln, ob die Position mit dem geografischen Ort übereinstimmt. Ist dies der Fall, bspw. wenn ein Ziel einer Fahrt erreicht wird, so kann ebenfalls ein Signal von der Positionserfassungseinheit ausgegeben werden. Die Steuereinheit kann das jeweilige Signal dann auswerten. Basierend auf der Auswertung gibt die Steuereinheit SE eine Information über die wenigstens eine Kommunikationsschnittstelle KS vorzugsweise an ein Kommunikationsnetzwerk aus. Die von der Steuereinheit SE ausgegebene Information kann somit z.B. anzeigen, ob eine Position, bspw. ein Ziel einer Fahrt, erreicht wurde, ob eine Person das Fahrzeug betreten oder verlassen hat, und ob die Identität einer Position mit einer bestimmten Identität überein stimmt.

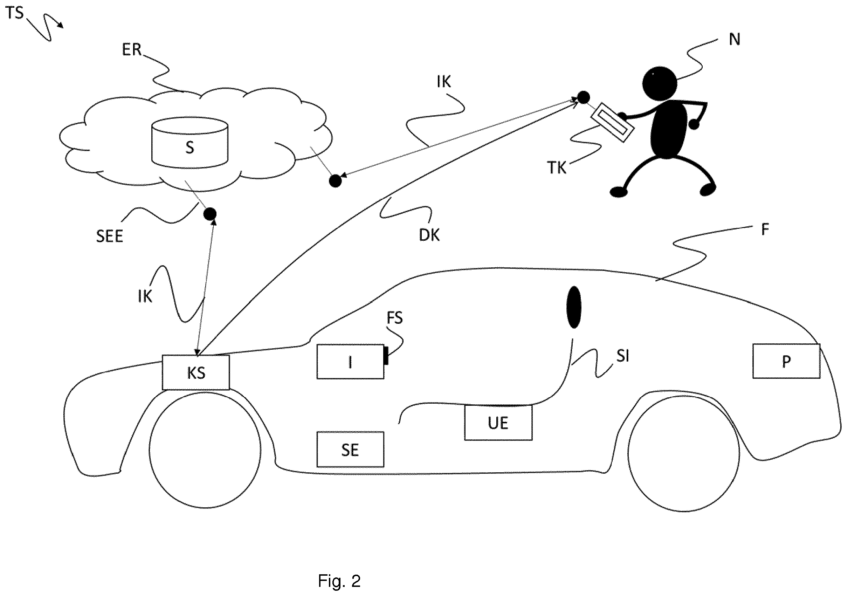

Fig. 2 zeigt eine schematische Übersicht über ein Transportsystem TS gemäß der Erfindung. Gezeigt ist wiederum das Fahrzeug F. Für das Fahrzeug F sind weiter die bereits mit Blick auf Fig. 1 beschriebenen Einheiten gezeigt. Insbesondere ist wiederum die wenigstens die wenigstens eine Kommunikationsschnittstelle KS, die Steuereinheit SE, die Überwachungseinheit UE, die Identifikationseinheit I sowie die die Positionserfassungseinheit P gezeigt. Weiter ist ein entferntes Rechnersystem ER schematisch dargestellt bspw. ein Cloud-System bzw. ein Server-System, das mit dem Fahrzeug F mittels der wenigstens einen Kommunikationsschnittstelle KS und über ein Kommunikationsnetzwerk (nicht gezeigt) verbunden ist. Exemplarisch ist der Speicher S in Fig. 2 daher nicht als Teil des Fahrzeugs F gezeigt, sondern ist Teil des entfernten Rechnersystems ER. Der Speicher S ist also hier funktional und kommunikativ mit der Steuereinheit SE über die Kommunikationsschnittstelle KS verbunden. Die Verbindung der in Fig. 1 exemplarisch dargestellten Einheiten mit der Steuereinheit SE ist in Fig. 2 nicht dargestellt.

Exemplarisch ist lediglich die Überwachungseinheit UE als Sensor eines Sitzes für einen Nutzer des Fahrzeugs F dargestellt bspw. ein Drucksensor in einem Sitz SI. Die Identifikationseinheit I kann bspw. einen Fingerabdrucksensor FS umfassen. Alternativ oder zusätzlich kann eine Gesichtserkennung oder ein Iris-Scan mit einem optischen Sensor, z.B. einer Kamera erfolgen und/oder ein Mikrofon für eine Stimmenerkennung vorgesehen sein. Ebenfalls ist ein Nutzer N mit einem Telekommunikationsgerät TK dargestellt. Das Fahrzeug F bzw. die Steuereinheit SE kann nun mittels der Kommunikationsschnittstelle KS direkt mit dem Telekommunikationsgerät TK des Nutzers N kommunizieren (Pfad DK). Es ist jedoch alternativ oder zusätzlich auch eine indirekte Kommunikation zwischen dem Telekommunikationsgerät TK und der Steuereinheit SE möglich, bspw. über das entfernte Rechnersystem (Pfade IK).

Die Steuereinheit SE kann mit dem Telekommunikationsgerät TK des Nutzers N kommunizieren. So kann der Nutzer N von dem Telekommunikationsgerät TK bspw. Daten an das Fahrzeug F senden und Daten von dem Fahrzeug F empfangen. Insbesondere kann der Nutzer N mittels des Telekommunikationsgeräts TK (Smartphone, Tablet, Laptop, ...) eine Auftragsinformation an das Fahrzeug direkt oder indirekt übermitteln, während das Fahrzeug die Authentifizierungsinformation an den Nutzer direkt oder indirekt ausgeben kann. Die Authentifizierungsinformation wird dabei bevorzugt an das Telekommunikationsgerät ausgegeben. Das Telekommunikationsgerät kann dabei auch Teil eines Straßenobjekts, bspw. einer Schranke oder einer Zufahrtsbeschränkungsvorrichtung sein. Das Fahrzeug F bzw. die Steuereinheit SE kann dann, insbesondere abhängig von einem von der Positionserfassungseinheit P ausgegebenen Signal die Authentifizierungsinformationen direkt oder indirekt ausgeben.

Das entfernte Rechensystem ER kann dabei Teil eines Transportsystems TS sein. Das entferne Rechensystem kann wenigsten eine Sender-Empfänger-Einheit SEE aufweisen.

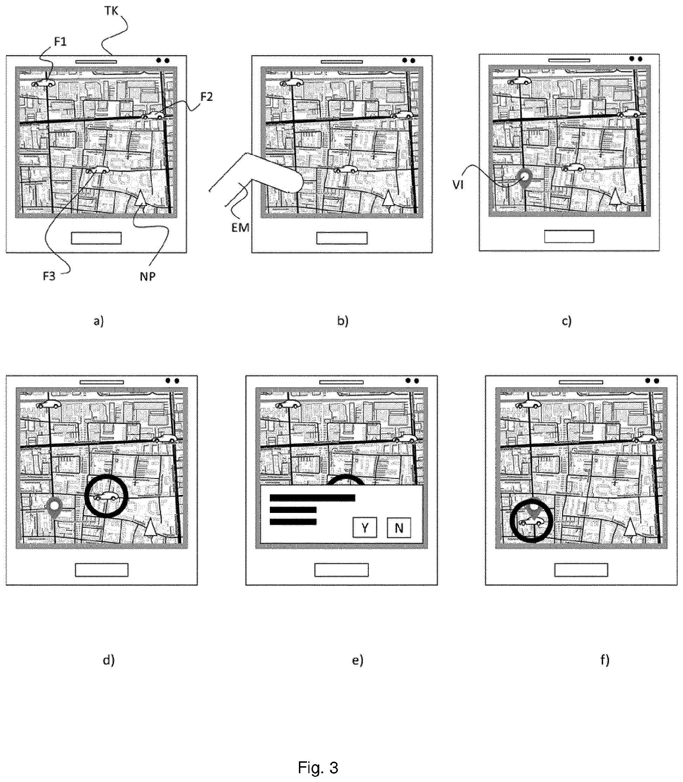

Mit Blick auf die Figs. 3a bis 3j ist nun ein Anwendungsbeispiel beschrieben, das die Verwendung der des Transportsystems TS veranschaulicht. Der Nutzer N kann auf seinem Telekommunikationsgerät TK bspw. eine Anwendung (Applikation, App) aufrufen, die von dem Transportsystem TS bzw. für das Transportsystem TS bereitgestellt ist. Die Applikation kann bspw. eine Kartendarstellung bereitstellen, die auf einer Anzeigeeinheit des Telekommunikationsgeräts TK angezeigt wird. Auf der Kartendarstellung können dann Fahrzeuge F1 bis F3 dargestellt werden, die im Wesentlichen dem Fahrzeug F entsprechen.

Der Nutzer N kann, wie in Fig. 3b illustriert, mittels eines Eingabemittels EM eine Stelle auf der dargestellten Kartenanzeige auswählen, zu der ein Fahrzeug der Fahrzeuge F1, F2, F3 geordert werden soll. Selbstverständlich kann die Stelle als Position des Nutzers N auch automatisch bestimmt werden, und vorzugsweise bestätigt der Nutzer N lediglich, dass ein Fahrzeug der Fahrzeuge F1, F2, F3 zu seiner Position geordert werden soll. Zusätzlich kann der Nutzer N weitere Informationen übermitteln, auf deren Basis ein Fahrzeug der Fahrzeuge F1, F2, F3 ausgewählt wird, insbesondere durch ein entferntes Rechensystem. Der Nutzer N kann z.B. eine Anzahl von Personen und/oder Gepäckstücken angeben, die/das transportiert werden soll, und/oder ein benötigtes Transportvolumen (z.B. in Litern, cm³, aber auch z.B. als Höhe, Breite und/oder Tiefe eines Transportguts). Ein Fahrzeug, das sich für den Transport bzw. die Beförderung eignet, kann dann automatisch für den Nutzer N ausgewählt werden.

Die Stelle kann auf einer Kartendarstellung bspw. durch einen visuellen Indikator VI dargestellt werden, wie dies in Fig. 3c veranschaulicht ist. Mittels möglicherweise nachgelagerter Interaktionen mit der Applikation kann der Nutzer dann einen Auftrag für einen Transport erstellen und/oder an das entfernte Rechensystem übermitteln. Durch das entfernte Rechensystem ER wird nun ein Fahrzeug aus den Fahrzeugen F1, F2, F3 ausgewählt, das den Auftrag bzw. ausführen soll.

Das Fahrzeug, im Beispiel das Fahrzeug F3, kann dem Nutzer N auf dem Telekommunikationsgerät TK angezeigt werden, wie dies in Fig. 3d veranschaulicht ist. Das Fahrzeug F3 kann optisch hervorgehoben werden (z.B. durch einen umgebenden Ring).

Wie in Fig. 3e angedeutet, können nun dem Nutzer Daten zu dem Fahrzeug übermittelt werden. Insbesondere kann hier von dem entfernten Rechensystem ER eine Verifikationsinformation an das Telekommunikationsgerät TK und/oder ein anderes Telekommunikationsgerät übermittelt werden, die für eine spätere Verifikation einer Authentifizierungsinformation des Fahrzeugs benötigt wird. Der Nutzer N kann bestätigen, dass das ausgewählte Fahrzeug für den Auftrag ausgewählt werden soll. Das Transportsystem TS, d.h. das entfernte Rechensystem ER, übermittelt dann eine Auftragsinformation an das Fahrzeug F3.

Wie in Fig. 3f schematisch dargestellt, übernimmt das Fahrzeug F3 nun gemäß der Auftragsinformation den Auftrag, indem es Aktionen ausführt, die von der Steuereinheit SE basierend auf der Auftragsinformation bestimmt werden. Insbesondere kann die Steuereinheit SE Aktoren (Motor, Getriebe, Bremse, ...) ansteuern, um das Fahrzeug F3 zu der Position zu bewegen, die der Stelle entspricht, die automatisch oder durch den Nutzer N mittels des Eingabemittels EM ausgewählt wurde. Wie in Fig. 3f dargestellt, bewegt sich das Fahrzeug F3 also zu dem mittels des visuellen Identifikators VI markierten geografischen Bereich. Beispielsweise kann das Fahrzeug F3 einen (Waren-/Güter-)Transport- oder einen Personenbeförderungsauftrag ausführen. Ist das Fahrzeug F3 an dem durch den Nutzer N bestimmten Ziel angekommen, so können mehreren Aktionen ausgeführt werden.

Soll z.B. eine Person transportiert werden so kann das Fahrzeug bei Eintritt in den geographischen Bereich, der der Stelle VI entspricht, die Authentifizierungsinformation ausgeben. Der Eintritt kann durch die Positionserfassungseinheit P bestimmt werden. Der Nutzer N kann in dem Auftrag definieren, welche Person oder Personen befördert werden soll/sollen, bspw. indem er einen Identifikatior der Person/-en oder wenigstens eines Repräsentanten an das entfernte Rechensystem ER übermittelt, z.B. eine Telefonnummer, eine Messenger ID, eine E-Mail Adresse, eine Kontoinformation eines Sozialen Netzwerks, usw. Das Fahrzeug F3 kann nun selbstständig die Authentifizierungsinformation auf Basis des Identifikators an wenigstens eine Person senden. Die Authentifizierungsinformation kann dabei auch Informationen zur Identifikation des Fahrzeugs F3 enthalten. Der wenigstens einen Person kann die Verifikationsinformation von dem entfernten Rechensystem zugesendet werden. So kann die wenigstens eine Person die Authentifizierungsinformation verifizieren, z.B. durch visuelle Prüfung einer auf einer Anzeigeeinheit angezeigten Information und/oder mittels eines Telekommunikationsendgerätes TK (z.B. mittels eines Smartphones), das auch eine kryptographische Verifikation unter Verwendung einer Recheneinheit ermöglicht und darauf basierend Informationen ausgeben kann (z.B. grüne Anzeige bei erfolgreicher Verifizierung und rote Anzeige bei gescheiterter Verifizierung).

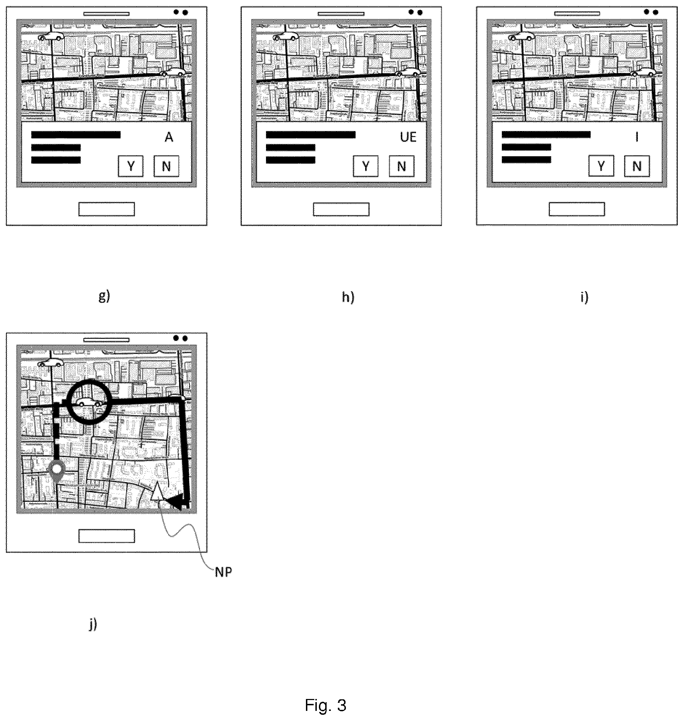

Wie in Fig. 3g veranschaulicht ist, kann dann eine Information A über die Verifizierung der Authentifizierungsinformation an den Nutzer S gesendet werden. Der Nutzer N kann dann z.B. optional veranlassen, dass das Fahrzeug geöffnet wird werden kann.

Soll z.B. ein Paket an der durch den visuellen Identifikator VI bestimmten Position abgeholt werden, so kann sich eine Person, die z.B. den Gegenstand in das Fahrzeug verbringt, zunächst prüfen, ob eine Authentifizierungsinformation des Fahrzeugs mit einer Verifikationsinformation übereinstimmt. Beispielsweise kann einem Paketdienstleister so Zugang zum Innenraum des Fahrzeugs gewährt werden, um einen Gegenstand bspw. ein Paket in dem Fahrzeug zu hinterlegen. Eine Information über eine entsprechende Authentifizierung kann dem Nutzer N auf dem Telekommunikationsgerät TK angezeigt werden. Der Nutzer kann zudem einen Zugang zu dem Fahrzeug gewähren oder verweigern, z.B. durch Auswahl der entsprechenden Option (Y, N).

Wie in Fig. 3h angedeutet, kann dem Nutzer N auch eine Information der Überwachungseinheit UE übermittelt werden. Insbesondere kann so festgestellt werden, ob das Fahrzeug F3 betreten wurde, bzw. ob eine Veränderung im Innenraum bspw. durch ein in das Fahrzeug F3 verbrachten Gegenstand erfolgt ist. Der Nutzer kann wiederum entscheiden, ob bspw. mit der Ausführung des Beförderungs- bzw. Transportauftrags fortgefahren werden soll.

Insbesondere für einen Beförderungsauftrag für Personen kann es wichtig sein, dass auch eine Identifikation dieser Person erfolgt. Soll bspw. durch das Fahrzeug F3 eine Person an dem durch den visuellen Indikator VI identifizierten Ort abgeholt werden, so ist es für den Nutzer N möglicherweise entscheidend, dass die richtige Person von dem Fahrzeug F3 befördert wird. Dazu kann, wie in Fig. 3i exemplarisch dargestellt ist, durch die Identifikationseinheit I eine entsprechende Information zu dem Nutzer N bzw. dem Telekommunikationsgerät TK übermittelt werden. Der Nutzer N kann dann entscheiden, ob also bspw. der Beförderungs- oder der Transportauftrag weiter ausgeführt werden soll.

Wie in Fig. 3j veranschaulicht ist, kann der Nutzer N nun eine Fahrt des Fahrzeugs F3 auf der Kartendarstellung verfolgen. Dazu werden entsprechende Informationen von dem Fahrzeug, dem entfernten Rechnersystem ER ausgegeben und zwischen dem Telekommunikationsgerät TK, dem entfernten Rechnersystem ER und/oder dem Fahrzeug F3 ausgetauscht. Die Position des Nutzers N ist in der Karte als Dreieck NP dargestellt.

Erreicht das Fahrzeug F3 nun den Nutzer N an der Position NP, so kann durch das Fahrzeug eine Authentifizierungsinformation an den Nutzer N bzw. das Telekommunikationsgerät TK ausgegeben werden. Auf Basis der Verifikationsinformation, die dem Nutzer durch das Transportsystem TS übermittelt wurde, kann dann sowohl durch das Fahrzeug als auch durch den Nutzer ermittelt werden, ob das korrekte Fahrzeug F3 beim Nutzer angekommen ist. Ebenso kann so durch das Fahrzeug eine Bestätigung bzw. eine Beendigung des Auftrags gemäß der Auftragsinformationen registriert werden.

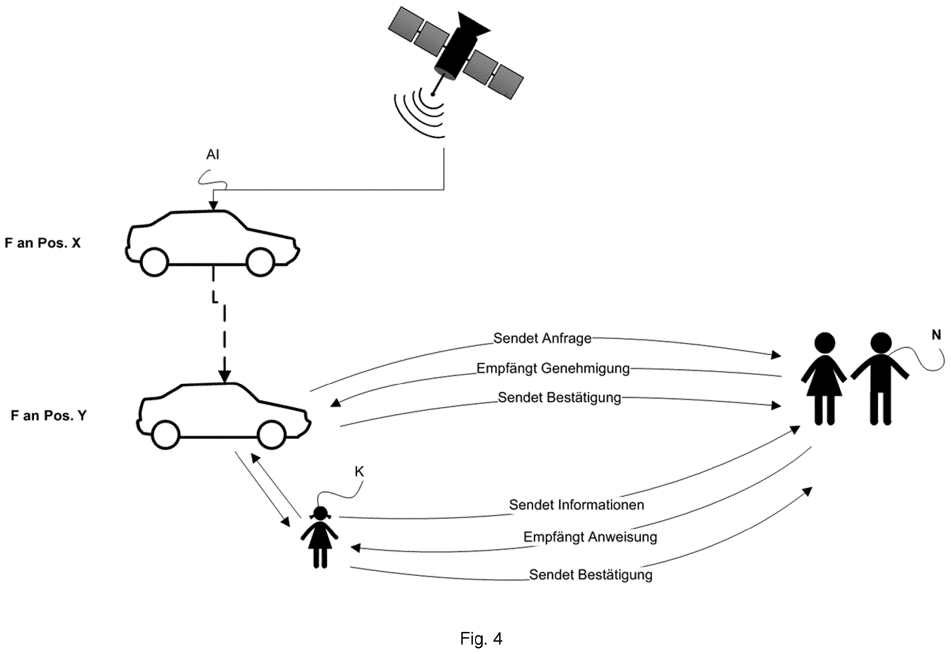

Mit Blick auf Fig. 4 soll nun ein weiteres Beispiel für eine Anwendung der Erfindung beschrieben werden.

Ein Fahrzeug F erhält eine Auftragsinformation AI, z. von dem entfernten Rechensystem ER über ein Kommunikationsnetzwerk (veranschaulicht durch einen Satelliten). Die Auftragsinformation AI kann von der Steuereinheit SE ausgewertet werden. Die Auftragsinformation AI kann bspw. angeben, dass eine Person K befördert werden soll. Bei der Person K kann es sich bspw. um ein Kind handeln. Das Fahrzeug F wird nun von der Steuereinheit SE auf Basis der Auswertung und durch direkte oder indirekte Ansteuerung von Fahrzeugaktoren von Position X zu Position Y bewegt.

Dabei kann vorgesehen sein, dass der Nutzer N den Identifikator an das entfernte Rechensystem ER und/oder das Fahrzeug F übermittelt, das dann selbstständig eine aktuelle Position der Person K ermitteln kann. Die Ermittlung der Position der Person K kann z.B. durch Zugriff auf ein Kommunikationsnetzwerk erfolgen, insbesondere durch eine Anfrage bei einem Netzwerkdienst wie einen Ortungsdienst (z.B. über eine Programmierschnittstelle, API) oder durch eine Positionsermittlung, z.B. mittels Triangulation.

An der Position X angekommen, sendet das Fahrzeug F nun eine Anfrage an den Nutzer N, bspw. einen Elternteil des Kindes, der den Transportauftrag mit der Auftragsinformation AI erteilt hat. Dabei werden von dem entfernten Rechnersystem ER und/oder dem Fahrzeug Authentifizierungsinformationen des Fahrzeugs an den Nutzer N ausgegeben bzw. Verifikationsinformationen erzeugt und übertragen. Gleichzeitig oder innerhalb eines zeitlich definierten Bereiches sendet nun auch die zu transportierende Person K eine Information an den Nutzer, bspw. über das entfernte Rechensystem ER und mittels eines Telekommunikationsgerätes der Person K, an das Telekommunikationsgerät TK des Nutzers N. Der Nutzer N kann nun einerseits eine Genehmigung (vgl. Fig. 3g) durch Bestätigung der Authentifizierungsinformation bzw. nach Verifikation der Authentifizierungsinformation an das Fahrzeug senden. Die Authentifizierungsinformation kann bereits bei Auftragseingang von dem Fahrzeug an den Nutzer übermittelt werden. Der Nutzer N sendet dann ebenfalls an die zu transportierende Person K eine Anweisung, z.B. in das Fahrzeug einzusteigen. Die Informationsübertragung ist dabei vorzugsweise mittels kryptographischer Verfahren gesichert, um eine Manipulation der Datenübertragung zu vermeiden und/oder zu erkennen. In dem Fahrzeug kann mittels der Überwachungseinheit UE bzw. der Identifikationseinheit I eine Überwachung dahingehend erfolgen, ob die Person K in das Fahrzeug einsteigt und ob es sich um die richtige Person K handelt. Die entsprechenden Informationen, die für die Identifikation der Person K erforderlich sind, können dabei durch den Nutzer N bereits in dem entfernten Rechensystem ER und insbesondere in dem Speicher S hinterlegt sei.

Das Fahrzeug F sendet dann eine Bestätigung an den Nutzer N, dass der Auftrag weiter ausgeführt wird. Ebenso kann zusätzlich noch eine Information durch die Person K, die zu transportieren ist, an den Nutzer N ausgegeben werden, die bestätigt, dass sich die Person K in dem Fahrzeug befindet.

Das Fahrzeug F kann die Authentifizierungsinformation an die Person K ausgeben. Die Person K kann die Authentifizierungsinformation basieren auf Verifikationsinformationen, die die Person K von dem Nutzer N und/oder dem entfernten Rechensystem ER erhält, prüfen. Die Prüfung kann automatisch durch das Telekommunikationsgerät der Person K erfolgen. Eine Informationsanzeige an die Person K kann auf einfache Weise erfolgen, z.B. mittels einer Ampelanzeige (rot: nicht Einsteigen, grün: Einsteigen ok).

Eine Übertragung der Information zwischen dem Fahrzeug F, dem entfernten Rechensystem ER, der Person K und/oder dem Nutzer N kann verschlüsselt erfolgen (mittels DES, 3DES, IDEA, CAST, ...). Auf der Seite des Nutzers N und/oder der Person K kann eine Entschlüsselung entsprechend erfolgen. Bei symmetrischen Verschlüsselungsverfahren ist dabei, anders als bei der Verwendung von asymmetrischen Verschlüsselungsverfahren, keine Übertragung eines öffentlichen Schlüssels bzw. die Generierung eines privaten Schlüssels notwendig. Jedoch kann auch eine im Wesentlichen bekannte Public-Key-Infrastructure (PKI) eingesetzt werden, um eine Verschlüsselung der Nachrichten sowie eine Authentifizierung des Fahrzeugs, des Nutzers, und/oder der zu transportierenden Person ermöglicht.

Die Positionierungseinheit P erlaubt es dabei, die Position des Fahrzeugs F zu ermitteln und eine entsprechende Information an den Nutzer auszugeben. Einer Erfassung einer Position kann mit gängigen Positionierungssystemen (GPS, Galileo, GLONASS, ...) erfolgen.

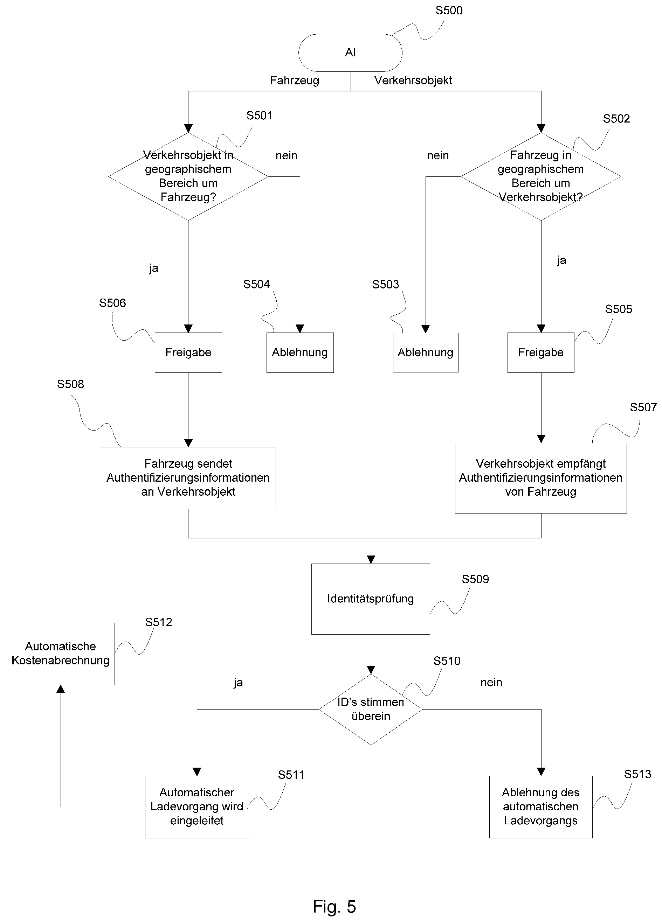

In Fig. 5 ist ein weiteres Beispiel für die Anwendung der Erfindung gezeigt. Auf eine Auftragsinformation AI (Schritt S500) hin prüft das Fahrzeug F, ob es in einem definierten geografischen Bereich, bspw. um eine Ladestation zum Aufladen eines Energiespeichers eingetreten ist (Schritt S501). Parallel dazu kann das Verkehrsobjekt prüfen ()Schritt S502) ob sich das Fahrzeug in einem geographischen Bereich um das Verkehrsobjekt befindet. Dazu können, insbesondere über das entfernte Rechensystem ER, Positionsinformationen zwischen dem Fahrzeug und dem Verkehrsobjekt ausgetauscht werden. Eine Kommunikation kann auch in einer ad-hoc Kommunikation oder z.B. einer Nahfeldkommunikation (NFC, RFID) vorzugsweise drahtlos erfolgen. Befindet sich das Fahrzeug nicht in dem bestimmten geografischen Bereich des Verkehrsobjekts, oder umgekehrt, so kann ein Ladevorgang abgelehnt werden (Schritt S503 und Schritt S504). Ist dies jedoch der Fall (Schritt S505 und Schritt S506), so kann das Fahrzeug Authentifizierungsinformationen an das Verkehrsobjekt senden (Schritt S507). Das Verkehrsobjekt kann dann die Authentifizierung des Fahrzeugs durchführen (Schritt S508 und S509), und bestätigen, dass es sich um ein bestimmtes Fahrzeug handelt. So kann bspw. geprüft werden, ob das richtige Fahrzeug einen Ladeauftrag ausführt (Schritt S510). Ist das Fahrzeug korrekt identifiziert worden, so erfolgt ein Laden des Energiespeichers (Schritt S511) und z.B. eine automatische Abrechnung (Schritt S512) des Ladevorgangs. Erfolgt keine Authentifizierung, so wird ein Ladevorgang abgelehnt (Schritt S513).

Ähnlich kann eine Authentifizierung bei anderen Verkehrsobjekten wie einer Schranke oder einer Waschanlagenvorrichtung erfolgen.

Insbesondere bei zumindest teilweise autonom fahrenden Fahrzeugen kann so eine Identifizierung bzw. eine Authentifizierung des Fahrzeugs erfolgen. Autonom fahrende Fahrzeuge können sich so gegenüber einem Nutzer (bzw. Auftraggeber), gegenüber einem Verkehrsobjekt und anderen Fahrzeugen ausweisen. So kann eine automatische Überprüfung des Fahrzeugs erfolgen und bspw. eine Zufahrt zu beschränkten Bereichen freigegeben oder verwehrt werden. Als Beispiele sind hier militärische Anlagen, Parkplätze und Parkhäuser zu nennen. An den Nutzer kann automatisch eine Nachricht gesendet werden, sobald eine Person das Fahrzeug betreten hat. Als Beispiel wurde auch bereits eine selbstständige Authentifizierung des Fahrzeugs F an einer Ladesäule für einen automatisierten Ladevorgang genannt.

Die räumliche Annäherung an ein Straßenverkehrsobjekt kann dabei ein auslösender Faktor zur Übertragung der Authentifizierungsinformation des Fahrzeugs sein. Beispielsweise kann, wenn das Fahrzeug in den Empfangs- / Sendebereich einer Funksendeanlage eintritt, das Fahrzeug automatisch eine Authentifizierung aussenden. Entweder durch die Auftragsinformation oder durch ein von einem Verkehrsobjekt ausgesendeten Signal kann dann das Fahrzeug auch verschiedene Authentifizierungsinformationen, bspw. abhängig von verschiedenen Sicherheitsstufen, übermitteln.

Auch kann bezogen auf den Auftrag eine Authentifizierung mit einer bestimmten Sicherheitsstufe konfiguriert sein. So kann bspw. für einen Personentransport eine höhere Sicherheitsanforderung konfiguriert werden, als bspw. bei einem Transport von Gegenständen. Insofern kann ein Verkehrsobjekt bspw. eine Anforderung für eine Authentifizierung an das Fahrzeug senden und die entsprechende vom Fahrzeug gesendete Authentifizierungsinformation auswerten. So kann das Verkehrsobjekt in Kommunikation mit dem autonomen Fahrzeug F eine Zufahrtsregelung bzw. das Abprüfen einer Zufahrtsberechtigung durchführen. Die Positionserfassungseinheit P kann für die Bestimmung einer Position des Fahrzeugs auf weitere Sensoren wie Außenkameras oder Navigationsdaten zugreifen.

Der Speicher S kann auch zwischen dem Fahrzeug F und dem entfernten Rechensystem ER aufgeteilt sein, sodass sich ein Teil des Speichers S in dem Fahrzeug und ein Teil des Speichers S in dem entfernten Rechensystem ER bzw. dem Transportsystem TS befindet und/oder funktional damit verbunden ist. Das Fahrzeug kann insbesondere bei Erreichen eines Ziels bzw. Zwischenziels die Authentifizierungsinformation an eine Person und/oder den Nutzer N ausgeben. Somit kann die Person und/oder der Nutzer N sicher sein, dass er von dem richtigen Fahrzeug befördert wird. Dazu kann sowohl durch das entfernte Rechensystem ER und/oder den Nutzer N eine Verifikationsinformation an die Person gesendet werden. Sendet dann das Fahrzeug F seine Authentifizierungsinformation an den Passagier PA, kann dieser überprüfen, ob das richtige Fahrzeug angekommen ist und somit das richtige Fahrzeug für den Transport auswählen.

Zusätzlich kann neben vorzugsweise drahtlosen Kommunikationsverbindung auch eine optische oder akustische Signalisierung durch das Fahrzeug erfolgen, die den Passagier PA darauf hinweist, welches Fahrzeug er zu wählen hat.

Somit wird es möglich, dass autonom fahrende Fahrzeuge sich selbst ausweisen können. Fahrzeugnutzer und andere Akteure wie Fahrzeuge und Zufahrtsbeschränkungssysteme können sich darauf verlassen, dass es sich um ein bestimmtes Fahrzeug handelt, das bspw. einen bestimmten Auftrag ausführt.

Der Steuereinheit SE können durch Nutzer N, bzw. das Telekommunikationsgerät TK, eine Person und/oder das entfernte Rechensystem ER Konfigurationsdaten und/oder eine Anweisung übermittelt werden, die angeben/angibt, dass und ggf. Authentifizierungsinformation ausgegeben werden soll. Die Ausgabe ist also abhängig von den empfangenen Konfigurationsdaten und/oder der Anweisung. Die wobei die Steuereinheit SE empfängt die Konfigurationsdaten und/oder die Konfigurationsdaten an der Kommunikationsschnittstelle KS und/oder liest sie aus dem Speicher S aus.

Das entfernte Rechensystem ER weist zur Kommunikation wenigstens einen Sender auf, und kann die wenigstens eine Auftragsinformation das Fahrzeug F ausgeben oder weiterleiten. Das Fahrzeug führt dann basierend darauf eine Aktion aus. Es kann die Authentifizierungsinformation an den Sender übermitteln, vorzugsweise dann, wenn das Fahrzeug eine vorbestimmte Anweisung von dem Sender empfängt und/oder zuvor empfangen hat.

Der Identifikator des Fahrzeugs kann auch eine Information über einen Dienstleister umfassen, der Dienstleistungen mittels des Fahrzeugs F anbietet. Somit kann durch Verifikation der Authentifizierungsinformation auch überprüft werden, ob das Fahrzeug F von einem bestimmten Dienstleister betrieben wird. Die den Dienstleister betreffende Information kann dem Fahrzeug F mittels der dem Fahrzeug F zugeführten Information zugeführt werden. Es kann dann insbesondere überprüft werden, ob das Fahrzeug F von dem richtigen Dienstleister betrieben oder geschickt wird. Vorzugsweise weist das Fahrzeug F immer wenigstens einen eindeutigen Identifikator auf.

## Patentansprüche

1. Zumindest teilautonomes Fahrzeug (F), aufweisend
- wenigstens eine Kommunikationsschnittstelle (KS) zur fahrzeugexternen Kommunikation,
- einen Speicher (S), der dazu eingerichtet ist, wenigstens eine Authentifizierungsinformation zu speichern, und
- eine Steuereinheit (SE),
wobei die Steuereinheit (SE) dazu eingerichtet ist, die Kommunikationsschnittstelle (KS) anzusteuern, und die Authentifizierungsinformation aus dem Speicher (S) über die Kommunikationsschnittstelle (KS) auszugeben, wenn die Steuereinheit (SE) eine Anweisung zur Ausgabe der Authentifizierungsinformation empfängt, wobei die Steuereinheit (SE) dazu eingerichtet ist, die Authentifizierungsinformation aus wenigstens einem eindeutigen Identifikator des Fahrzeugs und/oder einer dem Fahrzeug (F) zugeführten Auftragsinformation zu erzeugen und in dem Speicher (S) zu speichern, wobei die Steuereinheit (SE) dazu eingerichtet ist, die zugeführte Auftragsinformation an der wenigstens einen Kommunikationsschnittstelle (KS) zu erfassen,
wobei das Fahrzeug (F) eine Positionserfassungseinheit (P) aufweist, die dazu eingerichtet ist, eine Position des Fahrzeugs zu bestimmen und die Position an die Steuereinheit (SE) auszugeben, wobei die Steuereinheit (SE) dazu eingerichtet ist, die wenigstens eine Authentifizierungsinformation abhängig von der Position automatisch auszugeben, um das Fahrzeug (F) gegenüber einem Nutzer, gegenüber einem Verkehrsobjekt oder gegenüber einem anderen Fahrzeug auszuweisen.

2. Fahrzeug (F) nach Anspruch 1, wobei die Steuereinheit (SE) dazu eingerichtet ist, die Authentifizierungsinformation über die wenigstens eine Kommunikationsschnittstelle (KS) in einer ad-hoc Kommunikation, drahtlos, drahtgebunden und/oder in einer Nahfeldkommunikation auszugeben.

3. Fahrzeug (F) nach einem der vorgehenden Ansprüche, aufweisend eine Überwachungseinheit (UE), die dazu eingerichtet ist, einen Bereich des Fahrzeugs zu überwachen und eine Überwachungsinformation an die Steuereinheit (SE) auszugeben, wobei die Steuereinheit (SE) dazu eingerichtet ist, abhängig von der Überwachungsinformation ein Signal auszugeben.

4. Fahrzeug (F) nach einem der vorgehenden Ansprüche, aufweisend eine Identifikationseinheit (I), die dazu eingerichtet ist, eine Identifikationsinformation zu erfassen und an die Steuereinheit (SE) auszugeben, wobei die Steuereinheit (SE) dazu eingerichtet ist, abhängig von der Identifikationsinformation ein Signal auszugeben.

5. Fahrzeug (F) nach einem der vorgehenden Ansprüche, wobei die Steuereinheit (SE) dazu eingerichtet ist, die wenigstens eine Kommunikationsschnittstelle (KS) zu überwachen und bei Empfang einer Anweisung die Authentifizierungsinformation auszugeben.

6. Fahrzeug (F) nach einem der vorgehenden Ansprüche, wobei die Steuereinheit (SE) dazu eingerichtet ist, die Authentifizierungsinformation abhängig von empfangenen Konfigurationsdaten und/oder der Anweisung auszugeben, wobei die Konfigurationsdaten von der Steuereinheit (SE) an einer Kommunikationsschnittstelle (KS) erfasst wird und/oder aus dem Speicher (S) ausgelesen wird.

7. Transportsystem, aufweisend
- ein zumindest teilweise autonomes Fahrzeug (f) nach Anspruch 1 und wenigstens einen Sender, der dazu eingerichtet ist, wenigstens eine Auftragsinformation (AI) an das zumindest teilweise autonomes Fahrzeug (F) nach Anspruch 1 auszugeben, wobei das Fahrzeug (F) dazu eingerichtet ist, eine Aktion abhängig von der Auftragsinformation (AI) auszuführen und eine Authentifizierungsinformation an den Sender zu übermitteln.

8. Transportsystem nach Anspruch 7, wobei der Sender dazu eingerichtet ist, die Authentifizierungsinformation mit einer Verifikationsinformation zu verifizieren.

9. Transportsystem nach Anspruch 7 oder 8, wobei das Fahrzeug (F) dazu eingerichtet ist, die wenigstens eine Authentifizierungsinformation an den Sender zu übermitteln, wenn eine bestimmte Position des Fahrzeugs in einem vorbestimmten Abstand zu einem und/oder innerhalb des wenigstens einen geografischen Bereichs liegt, mit dem geographischen Bereich übereinstimmt, und/oder eine Grenze des wenigstens einen geografischen Bereichs überschreitet.

10. Transportsystem nach einem der Ansprüche 7 bis 9, wobei das Fahrzeug (F) dazu eingerichtet ist, eine Position, eine Überwachungsinformation, und/oder eine Identifikationsinformation an den Sender auszugeben.

11. Transportsystem nach einem der Ansprüche 7 bis 10, wobei das der Sender dazu eingerichtet ist, auf Basis einer verifizierten Authentifizierungsinformation, der Position, der Überwachungsinformation, und/oder der Identifikationsinformation die Auftragsinformation (AI) und/oder einen Teil davon zu bestätigen, als erledigt zu definieren, zu beenden und/oder eine Aktion auszuführen.

12. Transportsystem nach einem der Ansprüche 7 bis 11, wobei der Sender ein Telekommunikationsgerät (TK) und/oder ein Verkehrsobjekt ist.

## Claims

1. At least partially autonomous vehicle (F), comprising
- at least one communication interface (KS) for vehicle-external communication,
- a memory (S) which is designed to store at least one piece of authentication information, and
- a control unit (SE),
wherein the control unit (SE) is designed to control the communication interface (KS) and to output the authentication information from the memory (S) via the communication interface (KS) when the control unit (SE) receives an instruction to output the authentication information, wherein the control unit (SE) is designed to generate the authentication information from at least one unique identifier of the vehicle and/or from ordering information supplied to the vehicle (F) and to store the same in the memory (S), wherein the control unit (SE) is designed to detect the supplied ordering information at the at least one communication interface (KS),
wherein the vehicle (F) comprises a position-detecting unit (P) which is designed to determine a position of the vehicle and to output the position to the control unit (SE), wherein the control unit (SE) is designed to automatically output the at least one piece of authentication information in dependence on the position in order to identify the vehicle (F) with respect to a user, with respect to a traffic object or with respect to another vehicle.

2. Vehicle (F) according to Claim 1, wherein the control unit (SE) is designed to output the authentication information via the at least one communication interface (KS) in ad-hoc communication, wirelessly, by wire and/or in near-field communication.

3. Vehicle (F) according to one of the preceding claims, comprising a monitoring unit (UE) which is designed to monitor a region of the vehicle and to output monitoring information to the control unit (SE), wherein the control unit (SE) is designed to emit a signal in dependence on the monitoring information.

4. Vehicle (F) according to one of the preceding claims, comprising an identification unit (I) which is designed to detect identification information and to output the same to the control unit (SE), wherein the control unit (SE) is designed to emit a signal in dependence on the identification information.

5. Vehicle (F) according to one of the preceding claims, wherein the control unit (SE) is designed to monitor the at least one communication interface (KS) and, on receipt of an instruction, to output the authentication information.

6. Vehicle (F) according to one of the preceding claims, wherein the control unit (SE) is designed to output the authentication information in dependence on received configuration data and/or on the instruction, wherein the configuration data are detected by the control unit (SE) at a communication interface (KS) and/or are read from the memory (S).

7. Transport system, comprising
- an at least partially autonomous vehicle (f) according to Claim 1 and at least one transmitter which is designed to output at least one piece of ordering information (AI) to the at least partially autonomous vehicle (F) according to Claim 1,
wherein the vehicle (F) is designed to perform an action in dependence on the ordering information (AI) and to transmit authentication information to the transmitter.

8. Transport system according to Claim 7, wherein the transmitter is designed to verify the authentication information using verification information.

9. Transport system according to Claim 7 or 8, wherein the vehicle (F) is designed to transmit the at least one piece of authentication information to the transmitter when a determined position of the vehicle is at a predetermined distance from a and/or within the at least one geographical region, coincides with the geographical region and/or crosses a boundary of the at least one geographical region.

10. Transport system according to one of Claims 7 to 9, wherein the vehicle (F) is designed to output a position, monitoring information and/or identification information to the transmitter.

11. Transport system according to one of Claims 7 to 10, wherein the transmitter is designed to confirm the ordering information (AI) and/or a part thereof on the basis of verified authentication information, the position, the monitoring information and/or the identification information, to define the same as completed, to terminate it and/or to perform an action.

12. Transport system according to one of Claims 7 to 11, wherein the transmitter is a telecommunication device (TK) and/or a traffic object.

## Revendications

1. Véhicule (F) au moins partiellement autonome, comprenant :
- au moins une interface de communication (KS) destinée à la communication avec l'extérieur du véhicule,
- une mémoire (S) configurée pour stocker au moins une information d'authentification, et
- une unité de commande (SE),
dans lequel l'unité de commande (SE) est configurée pour commander l'interface de communication (KS) et transmettre l'information d'authentification provenant de la mémoire (S) par l'intermédiaire de l'interface de communication (KS) lorsqu'elle reçoit une instruction de transmission de l'information d'authentification, dans lequel l'unité de commande (SE) est configurée pour générer l'information d'authentification à partir d'au moins un identifiant unique du véhicule et/ou d'une information de mission fournie au véhicule (F), et pour la stocker dans la mémoire (S), et dans lequel l'unité de commande (SE) est configurée pour recevoir l'information de mission fournie au niveau de ladite au moins une interface de communication (KS),
dans lequel le véhicule (F) comprend une unité de détermination de position (P) configurée pour déterminer une position du véhicule et transmettre cette position à l'unité de commande (SE), l'unité de commande (SE) étant configurée pour transmettre automatiquement ladite au moins une information d'authentification en fonction de la position, afin de permettre l'identification du véhicule (F) auprès d'un utilisateur, d'un objet de circulation ou d'un autre véhicule.

2. Véhicule (F) selon la revendication 1, dans lequel l'unité de commande (SE) est configurée pour transmettre l'information d'authentification par l'intermédiaire de ladite au moins une interface de communication (KS), dans le cadre d'une communication ad hoc, sans fil, filaire et/ou en champ proche.

3. Véhicule (F) selon l'une quelconque des revendications précédentes, comprenant une unité de surveillance (UE) configurée pour surveiller une zone du véhicule et transmettre une information de surveillance à l'unité de commande (SE), l'unité de commande (SE) étant configurée pour émettre un signal en fonction de l'information de surveillance.

4. Véhicule (F) selon l'une quelconque des revendications précédentes, comprenant une unité d'identification (I) configurée pour acquérir une information d'identification et la transmettre à l'unité de commande (SE), l'unité de commande (SE) étant configurée pour émettre un signal en fonction de l'information d'identification.

5. Véhicule (F) selon l'une quelconque des revendications précédentes, dans lequel l'unité de commande (SE) est configurée pour surveiller ladite au moins une interface de communication (KS) et pour transmettre l'information d'authentification à la réception d'une instruction.

6. Véhicule (F) selon l'une quelconque des revendications précédentes, dans lequel l'unité de commande (SE) est configurée pour transmettre l'information d'authentification en fonction de données de configuration reçues et/ou de l'instruction, les données de configuration étant acquises par l'unité de commande (SE) au niveau d'une interface de communication (KS) et/ou lues dans la mémoire (S).

7. Système de transport comprenant :
- un véhicule (f) au moins partiellement autonome selon la revendication 1 et au moins un émetteur configuré pour transmettre au véhicule (F) au moins partiellement autonome selon la revendication 1 au moins une information de mission (AI),
dans lequel le véhicule (F) est configuré pour exécuter une action en fonction de l'information de mission (AI) et transmettre une information d'authentification à l'émetteur.

8. Système de transport selon la revendication 7, dans lequel l'émetteur est configuré pour vérifier l'information d'authentification au moyen d'une information de vérification.

9. Système de transport selon la revendication 7 ou 8, dans lequel le véhicule (F) est configuré pour transmettre ladite au moins une information d'authentification à l'émetteur lorsqu'une position déterminée du véhicule se trouve à une distance prédéterminée d'au moins une zone géographique et/ou à l'intérieur de celle-ci, coïncide avec la zone géographique et/ou franchit une limite de ladite au moins une zone géographique.

10. Système de transport selon l'une quelconque des revendications 7 à 9, dans lequel le véhicule (F) est configuré pour transmettre à l'émetteur une position, une information de surveillance et/ou une information d'identification.

11. Système de transport selon l'une quelconque des revendications 7 à 10, dans lequel l'émetteur est configuré pour, sur la base d'une information d'authentification vérifiée, de la position, de l'information de surveillance et/ou de l'information d'identification, confirmer l'information de mission (AI) et/ou une partie de celle-ci, la considérer comme exécutée, y mettre fin et/ou exécuter une action.

12. Système de transport selon l'une quelconque des revendications 7 à 11, dans lequel l'émetteur est un appareil de télécommunication (TK) et/ou un objet de circulation.
